# EUROPEAN PATENT SPECIFICATION

(11) **EP 1 741 089 B1**
(45) Date of publication and mention of the grant of the patent: **30.12.2009**
(21) Application number: 05739859.6
(22) Date of filing: 26.04.2005
(51) Int. Cl.: G09G 5/39, G06F 12/08

(54) **GPU RENDERING TO SYSTEM MEMORY**
GPU-WIEDERGABE FÜR SYSTEMSPEICHER
RENDU D'UNITE DE TRAITEMENT GRAPHIQUE (GPU) A UNE MEMOIRE SYSTEME

(30) Priority: 27.04.2004 US 833694
(43) Date of publication of application: 10.01.2007
(73) Proprietor: NVIDIA Corporation, Santa Clara, CA 95050 (US)
(72) Inventor: RUBINSTEIN, Oren, Sunnyvale, California 94086 (US); REED, David, G., Saratoga, California 95070 (US); ALBEN, Jonah, M., San Jose, California 95124 (US)
(74) Representative: Dilg, Haeusler, Schindelmann Patentanwaltsgesellschaft mbH
(86) International application number: PCT/US2005/014368
(87) International publication number: WO 2005/104740

(56) References cited:
- EP-A2- 0 829 820
- US-A1- 2005 120 163
- US-B1- 6 195 734
- US-B1- 6 331 857
- US-B1- 7 009 618
- US-B2- 6 847 370

## Description

### BACKGROUND OF THE INVENTION

The present invention relates to the field of computer graphics. Many computer graphic images are created by mathematically modeling the interaction of light with a three dimensional scene from a given viewpoint. This process, called rendering, generates a two-dimensional image of the scene from the given viewpoint, and is analogous to taking a photograph of a real-world scene.

As the demand for computer graphics, and in particular for real-time computer graphics, has increased, computer systems with graphics processing subsystems adapted to accelerate the rendering process have become widespread. In these computer systems, the rendering process is divided between a computer's general purpose central processing unit (CPU) and the graphics processing subsystem. Typically, the CPU performs high level operations, such as determining the position, motion, and collision of objects in a given scene. From these high level operations, the CPU generates a set of rendering commands and data defining the desired rendered image or images. For example, rendering commands and data can define scene geometry, lighting, shading, texturing, motion, and/or camera parameters for a scene. The graphics processing subsystem creates one or more rendered images from the set of rendering commands and data.

A typical graphics processing subsystem includes one or more graphics processing units (GPUs) or coprocessors. Each GPU executes rendering commands generated by the CPU. In addition to one or more GPUs, a graphics processing subsystem also includes memory. The graphics subsystem memory is used to store one or more rendered images to be output to a display device, geometry data, texture data, lighting and shading data, and other data used to produce one or more rendered images.

To maximize rendering performance, the graphics subsystem memory is typically segregated from the general purpose system memory used by the computer system. This allows the graphics processing subsystem to maximize memory access performance, and consequently, rendering performance. However, having separate memory for the graphics processing subsystem increases costs significantly, not only because of the expense of extra memory, which can be hundreds of megabytes or more, but also due to the costs of supporting components such as power regulators, filters, and cooling devices and the added complexity of circuit boards. Moreover, the extra space required for separate graphics processing subsystem memory can present difficulties, especially with notebook computers or mobile devices.

One solution to the problems associated with separate graphics processing subsystem memory is to use a unified memory architecture, in which all of the data needed by the graphics processing subsystem, for example geometry data, texture data, lighting and shading data, and rendered images, is stored in the general purpose system memory of the computer system. Traditionally, the data bus connecting the graphics processing subsystem with system memory limits the performance of unified memory architecture systems.

Improved data bus standards, such as the PCI-Express data bus standard, increase the bandwidth available for accessing memory; however, achieving optimal rendering performance with an unified memory architecture still requires careful attention to memory bandwidth and latency. Moreover, the PCI-Express data bus standard introduces its own problems, including system deadlock and high overhead for selective memory accesses. Additionally, scanout, which is the process of transferring a rendered image from memory to a display device, requires precise timing to prevent visual discontinuities and errors. Because of this, performing scanout from a rendered image stored in system memory is difficult.

It is therefore desirable for a graphics processing subsystem using a unified memory architecture to provide good rendering performance and error-free scanout from system memory. Moreover, it is desirable for the graphics processing subsystem to prevent problems such as system deadlock and high overhead for selective memory accesses.

US6195734 discloses to use virtual registers in order to remap virtual addresses of memory operation requests to physical memory locations.

A unified memory architecture having translation hardware for mapping virtual addresses is known from EP0892820.

### BRIEF SUMMARY OF THE INVENTION

An embodiment of the invention enables a graphics processing subsystem to use system memory as its graphics memory for rendering and scanout of images. To prevent deadlock of the data bus, the graphics processing subsystem may use an alternate virtual channel of the data bus to access additional data from system memory needed to complete a write operation of a first data. In communicating with the system memory, a data packet including extended byte enable information allows the graphics processing subsystem to write large quantities of data with arbitrary byte masking to system memory. To leverage the high degree of two-dimensional locality of rendered image data, the graphics processing subsystem arranges image data in a tiled format in system memory. A tile translation unit converts image data virtual addresses to corresponding system memory addresses. The graphics processing subsystem reads image data from system memory and converts it into a display signal.

According to the present invention, a graphics processing subsystem comprises a rendering unit adapted to create image data for a rendered image in response to rendering data, and a data bus interface adapted to be connected with a system memory device of a computer system via a data bus. In response to a write operation of a first data to a graphics memory associated with the graphics processing subsystem, the graphics processing subsystem is adapted to retrieve a second data necessary to compete the write operation of the first data. The graphics processing subsystem then determines from the second data a destination for the first data in the system memory and redirects the write operation of the first data to the destination for the first data in the system memory.

The graphics processing subsystem is adapted to receive the write operation of the first data via the data bus interface from a first virtual channel of the data bus and to retrieve the second data from system memory via the data bus interface using a second virtual channel of the data bus. In an embodiment, the destination for the first data in the system memory is within a portion of the system memory designated as the graphics memory associated with the graphics processing subsystem. In another embodiment, the second data includes address translation information, and the graphics processing subsystem is adapted to translate a virtual address associated with the graphics memory to a corresponding destination in system memory. In an embodiment, the graphics processing subsystem is adapted to retrieve the second data from a local memory connected with the graphics processing subsystem.

In a further embodiment, the graphics processing subsystem includes a tile address translation unit adapted to convert a virtual memory address corresponding to a location in an image to a memory address within a tiled arrangement of image data in system memory. The tile address translation unit may be further adapted to initiate a plurality of system memory accesses via the data bus interface over the data bus in response to a range of virtual memory addresses corresponding to a contiguous portion of an image. Depending upon the range of virtual memory addresses, the plurality of system memory accesses may be for non-contiguous portions of system memory.

In still another embodiment, the data bus interface is adapted to communicate a third data with the system memory via the data bus using a data packet of a first data packet type in response to an instruction indicating that a memory controller associated with the system memory is compatible with the first data packet type. The first data packet type includes extended byte enable data. In response to an instruction indicating that the memory controller is incompatible with the first data packet type, the data bus interface communicates the third data with the system memory via the data bus using a plurality of data packets of a second data packet type.

In an additional embodiment, the graphics processing subsystem includes a display device controller adapted to communicate a display signal corresponding with the rendered image with a display device. In one embodiment, the display device controller is adapted to retrieve image data corresponding with the rendered image from a local memory connected with the graphics processing subsystem. In another embodiment, the display device controller is adapted to retrieve image data corresponding with the rendered image from the system memory.

In an embodiment, the display device controller is adapted to retrieve a first image data corresponding with a first row of the rendered image from a tiled arrangement of image data in the system memory and to communicate the first image data with the display device. The graphics processing subsystem may retrieve a set of image data from the system memory corresponding with a set of tiles of the rendered image including the first row of the rendered image. The graphics processing subsystem may discard a portion of the set of image data not including the first row of image data. In an alternate embodiment, the display device controller includes an image data cache adapted to store a second image data included in the set of tiles and corresponding with at least one additional row of the rendered image. The display device controller is adapted to retrieve the second image data from the image data cache subsequent to retrieving the first image data and to communicate the second image data with the display device.

### BRIEF DESCRIPTION OF THE DRAWINGS

The invention will be described with reference to the drawings, in which:
Figure 1 is a block diagram of a computer system suitable for practicing an embodiment of the invention;
Figure 2 illustrates a general technique for preventing system deadlock according to an embodiment of the invention;
Figure 3 illustrates a general technique for preventing system deadlock according to another embodiment of the invention;
Figures 4A and 4B illustrate a system for selectively accessing memory over a data bus according to an embodiment of the invention;
Figures 5A and 5B illustrate a system of organizing display information in system memory to improve rendering performance according to an embodiment of the invention;
Figure 6A and 6B illustrate a system for accessing display information according to an embodiment of the invention; and
Figures 7A-7C illustrate systems for outputting display information in system memory to a display device according to embodiments of the invention.
In the drawings, the use of identical reference numbers indicates identical components.

### DETAILED DESCRIPTION OF THE INVENTION

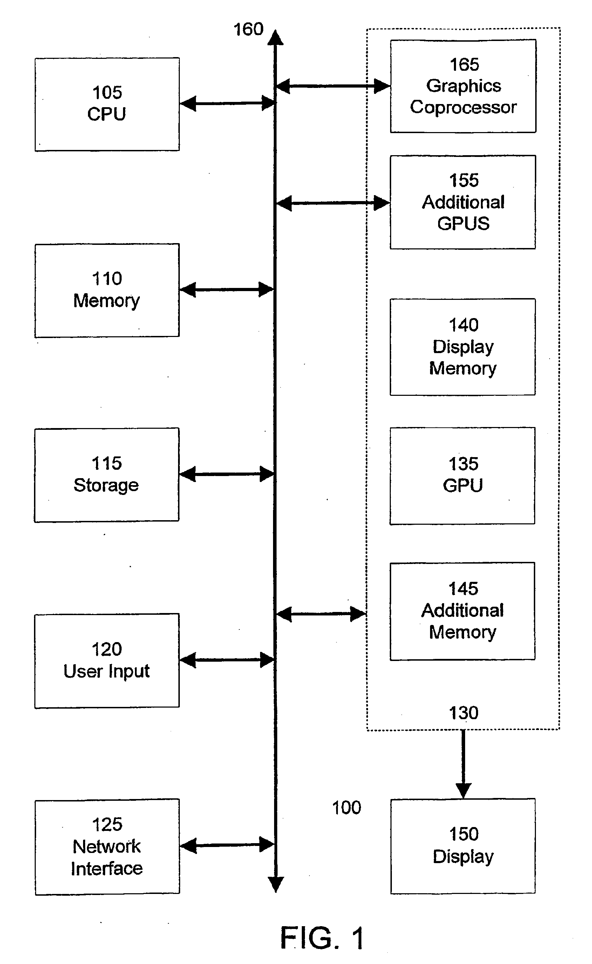

Figure 1 is a block diagram of a computer system 100, such as a personal computer, video game console, personal digital assistant, or other digital device, suitable for practicing an embodiment of the invention. Computer system 100 includes a central processing unit (CPU) 105 for running software applications and optionally an operating system. In an embodiment, CPU 105 is actually several separate central processing units operating in parallel. Memory 110 stores applications and data for use by the CPU 105. Storage 115 provides non-volatile storage for applications and data and may include fixed disk drives, removable disk drives, flash memory devices, and CD-ROM, DVD-ROM, or other optical storage devices. User input devices 120 communicate user inputs from one or more users to the computer system 100 and may include keyboards, mice, joysticks, touch screens, and/or microphones. Network interface 125 allows computer system 100 to communicate with other computer systems via an electronic communications network, and may include wired or wireless communication over local area networks and wide area networks such as the Internet. The components of computer system 100, including CPU 105, memory 110, data storage 115, user input devices 120, and network interface 125, are connected via one or more data buses 160. Examples of data buses include ISA, PCI, AGP, PCI, PCI-Express, and HyperTransport data buses.

A graphics subsystem 130 is further connected with data bus 160 and the components of the computer system 100. The graphics subsystem may be integrated with the computer system motherboard or on a separate circuit board fixedly or removably connected with the computer system. The graphics subsystem 130 includes a graphics processing unit (GPU) 135 and graphics memory. Graphics memory includes a display memory 140 (e.g., a frame buffer) used for storing pixel data for each pixel of an output image. Pixel data can be provided to display memory 140 directly from the CPU 105. Alternatively, CPU 105 provides the GPU 135 with data and/or commands defining the desired output images, from which the GPU 135 generates the pixel data of one or more output images. The data and/or commands defining the desired output images is stored in additional memory 145. In an embodiment, the GPU 135 generates pixel data for output images from rendering commands and data defining the geometry, lighting, shading, texturing, motion, and/or camera parameters for a scene.

In another embodiment, display memory 140 and/or additional memory 145 are part of memory 110 and is shared with the CPU 105. Alternatively, display memory 140 and/or additional memory 145 is one or more separate memories provided for the exclusive use of the graphics subsystem 130. The graphics subsystem 130 periodically outputs pixel data for an image from display memory 218 and displayed on display device 150. Display device 150 is any device capable of displaying visual information in response to a signal from the computer system 100, including CRT, LCD, plasma, and OLED displays. Computer system 100 can provide the display device 150 with an analog or digital signal.

In a further embodiment, graphics processing subsystem 130 includes one or more additional GPUs 155, similar to GPU 135. In an even further embodiment, graphics processing subsystem 130 includes a graphics coprocessor 165. Graphics processing coprocessor 165 and additional GPUs 155 are adapted to operate in parallel with GPU 135, or in place of GPU 135. Additional GPUs 155 generate pixel data for output images from rendering commands, similar to GPU 135. Additional GPUs 155 can operate in conjunction with GPU 135 to simultaneously generate pixel data for different portions of an output image, or to simultaneously generate pixel data for different output images. In an embodiment, graphics coprocessor 165 performs rendering related tasks such as geometry transformation, shader computations, and backface culling operations for GPU 135 and/or additional GPUs 155.

Additional GPUs 155 can be located on the same circuit board as GPU 135 and sharing a connection with GPU 135 to data bus 160, or can be located on additional circuit boards separately connected with data bus 160. Additional GPUs 155 can also be integrated into the same module or chip package as GPU 135. Additional GPUs 155 can have their own display and additional memory, similar to display memory 140 and additional memory 145, or can share memories 140 and 145 with GPU 135. In an embodiment, the graphics coprocessor 165 is integrated with the computer system chipset (not shown), such as with the Northbridge or Southbridge chip used to control the data bus 160.

System deadlock is a halt in system execution due to two operations both requiring a response from the other before completing their respective operations. One source of system deadlock results from posted write operations over the data bus connecting the CPU with the graphics processing subsystem. For many types of data buses, such as the PCI-Express data bus, a posted write operation must be completed before any other read or write operations can be performed over the data bus. A posted write operation is a write operation that is considered completed by the requester as soon as the destination accepts it. For performance purposes, PCI-Express uses posted write operations for all memory writes. PCI-Express write operations to configuration and I/O are typically non-posted write operations and require a confirmation that the write was finished, for example a completion message without data.

Because posted write operations block other data bus operations, a system deadlock can be created when the graphics processing subsystem requires additional information to complete a posted write issued by a CPU. For example, graphics processing subsystems often utilize a linear contiguous memory organization for processing convenience; however, the portion of the general purpose memory of the computer system used as the graphics memory in a unified memory architecture is typically arranged as sets of non-contiguous memory pages. A page translation table translates memory addresses from the linear contiguous address space used by the graphics processing subsystem to the paged, non-contiguous address space used by the computer system memory, enabling the graphics processing subsystem to access the computer system memory. In an embodiment, the page translation table is stored in system memory. When the graphics processing subsystem needs to access a given memory address in the graphics memory, an address translation portion of the graphics processing subsystem retrieves the appropriate portion of the page translation table, translates the linear memory address used by the graphics processing subsystem to a corresponding paged memory address used by system memory, and then access the system memory at the translated memory address.

When the CPU issues a posted write command requesting data to be written to a destination in graphics memory, no other data bus completion operations can be completed until the posted write command is accepted. However, in order to accept the posted write command, the graphics processing subsystem must access the page translation table stored in system memory to determine the paged memory address corresponding to the destination in graphics memory. Because the posted write command blocks any subsequent bus completion operations until it has been accepted, the bus completion operation returning the data from the page translation table is blocked by the posted write operation. As the posted write operation cannot be completed until the graphics processing subsystem receives the data from the page translation table, the computer system is deadlocked.

In another example, graphics processing system may execute in several different contexts. A separate context may be associated with each application, window, and/or execution thread processed by the graphics processing subsystem. When switching between contexts, the graphics processing subsystem finishes all operations from the prior context, stores state information associated with the prior context, loads state information for the new context, and begins execution of operations for the new context. To ensure proper execution, commands from the new context cannot be executed until the state information for the new context is loaded from memory.

In a unified memory architecture system, context state information may be stored in system memory. When the CPU instructs the graphics processing system to switch contexts via a posted write operation, the graphics processing subsystem must load the new context state information from system memory. However, because the posted write operation is not completed until the graphics processing subsystem has switched contexts, the graphics processing subsystem cannot access the system memory via the data bus. Thus, the computer system becomes deadlocked.

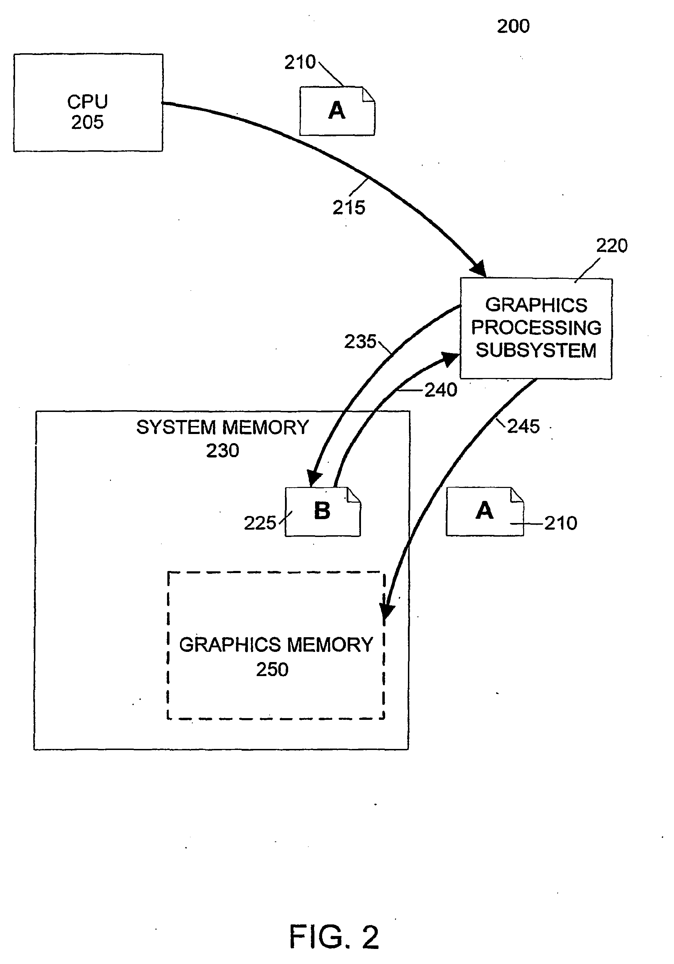

Figure 2 illustrates a general technique for preventing deadlock in a computer system 200 according to an embodiment of the invention. A CPU 205 communicates a first data 210 with the graphics processing subsystem 220 via a posted write operation 215 over a data bus. To complete the posted write operation 215, the graphics processing subsystem 220 must retrieve second data 225 from system memory 230. Under previous techniques for accessing system memory 230, the posted write operation 215 would block the graphics processing subsystem 220 from accessing the second data 225 in system data.

In an embodiment of the invention, the graphics processing subsystem 220 accesses second data 225 in system memory 230 by opening an alternate virtual channel for communication over the data bus. Virtual channels provide independent paths for data communications over the same data bus. As an example, the PCI-Express bus specification allows one PCI-Express data bus to communicate several different exchanges of data, with each exchange of data occurring independently and without interference from the other exchanges of data on the PCI-Express data bus.

In response to the posted write operation 215 communicated to the graphics processing subsystem 220 via a first virtual channel, for example VC0, on the data bus, the graphics processing subsystem 220 opens a second virtual channel, for example VC1, on the data bus for retrieving the second data 225 from system memory 230. Using the second virtual channel, VC1, the graphics processing subsystem 220 sends a request 235 for the second data 225 to the system memory 230 over the data bus. A response 240 from the system memory 230 using the second virtual channel, VC2, of the data bus returns the second data 225 to the graphics processing subsystem 220.

Using the second data 225 retrieved via the second virtual channel from the system memory 230, the graphics processing subsystem determines the information needed to complete the posted write operation 215 of the first data 210. For example, if the posted write operation 215 is attempting to write the first data 210 to the graphics memory, then the second data 225 may be a portion of an address translation table used to translate a linear memory address in graphics memory to a corresponding paged memory address in system memory 230. The graphics processing subsystem 220 may then write 245 the first data 210 to the graphics memory 250, which in the unified memory architecture of computer system 200 is located in a portion of the system memory 230. This completes the posted write operation 215 and frees the first virtual channel for additional operations.

In another example, the first data 210 may include a context switch command for the graphics processing subsystem 220. In this example, the CPU 205 communicates the first data 210 including the context switch command via a posted write operation 215 over a first virtual channel to the graphics processing subsystem 220. In response, the graphics processing subsystem 220 opens an alternate virtual channel, for example VC1, to retrieve the second data 225, which in this example includes context state information, from the system memory 230. The second data 225 is then used by the graphics processing subsystem 220 to switch contexts in accordance with the context switch command included in the first data 210, thereby completing the posted write operation 215 and freeing the first virtual channel for additional operations. The graphics processing subsystem also writes the context state information for the prior context to memory, so that it can be retreived later when execution switches back to that context.

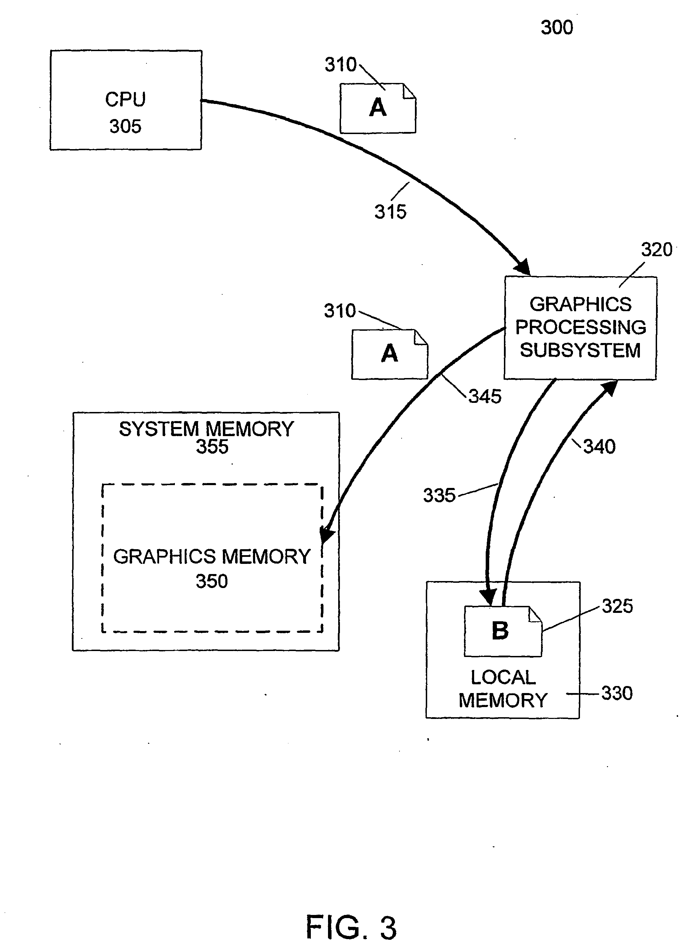

Figure 3 illustrates a general technique for preventing system deadlock in computer system 300 according to another embodiment of the invention. A CPU 305 communicates a first data 310 with the graphics processing subsystem 320 via a posted write operation 315 over a data bus. As in the embodiments discussed above, graphics processing subsystem 320 needs to retrieve a second data 325 to complete the posted write operation 315.

To avoid the problem of deadlock occurring when trying to retrieve the second data over a data bus blocked by the posted write operation 315, the embodiment of computer system 300 includes a local memory 330. In an embodiment, the local memory 330 is communicates with the graphics processing subsystem 320 via a separate data bus. The local memory 330 stores the second data 325 required by the graphics processing subsystem to complete a posted write operation 315. As the local memory 330 needs to store the second data 325 used to complete a posted write operation involving the first data 310, the local memory 330 May be a small quantity of memory, thereby preserving many of the advantages of a unified memory architecture.

In response to the posted write operation 315 communicated to the graphics processing subsystem 320 via a first data bus between the CPU 305 and the graphics processing subsystem, the graphics processing subsystem 320 sends a request 335 for the second data 325 to the local memory 330 over a separate data bus. A response 340 from the local memory 330 returns the second data 325 via the separate data bus.

Using the second data 325 retrieved from the local memory 330, the graphics processing subsystem 320 determines the information needed to complete the posted write operation 315 of the first data 310. For example, if the posted write operation 315 is attempting to write the first data 310 to the graphics memory, then the second data 325 may be a portion of an address translation table used to translate a linear memory address in graphics memory to a corresponding paged memory address in system memory 355. The graphics processing subsystem 320 may then write 345 the first data 310 to the graphics memory 350, which in the unified memory architecture of computer system 300 is located in a portion of the system memory 355. This completes the posted write operation 315 and frees the data bus between the CPU 305 and the graphics processing subsystem 320 for additional operations.

In another example, the first data 310 may include a context switch command for the graphics processing subsystem 320. In this example, the CPU 305 communicates the first data 310 including the context switch command via a posted write operation 315 to the graphics processing subsystem 320. In response, the graphics processing subsystem 320 retrieves the second data 325, which in this example includes context state information, from the local memory 330. The second data 325 is then used by the graphics processing subsystem 320 to switch contexts in accordance with the context switch command included in the first data 310, thereby completing the posted write operation 315 and freeing the data bus between the CPU 305 and the graphics processing subsystem 320 for additional operations.

Another problem with implementing graphics processing subsystems with unified memory architectures is the high overhead associated with selective memory access. Graphics processing subsystems commonly write or update image data for a small number of sparsely distributed pixels, rather than a large, contiguous block of image data. Conversely, computer systems optimize their system memory to be accessed in large, contiguous blocks. To cope with these differences, many data bus standards, such as PCI-Express, allow for the inclusion of byte enable data in addition to the data being written to memory. The byte enable data masks off portions of a block of data from being written to system memory. Using byte enable data allows devices to send large blocks of contiguous data to system memory while only updating a small number of sparsely distributed pixels.

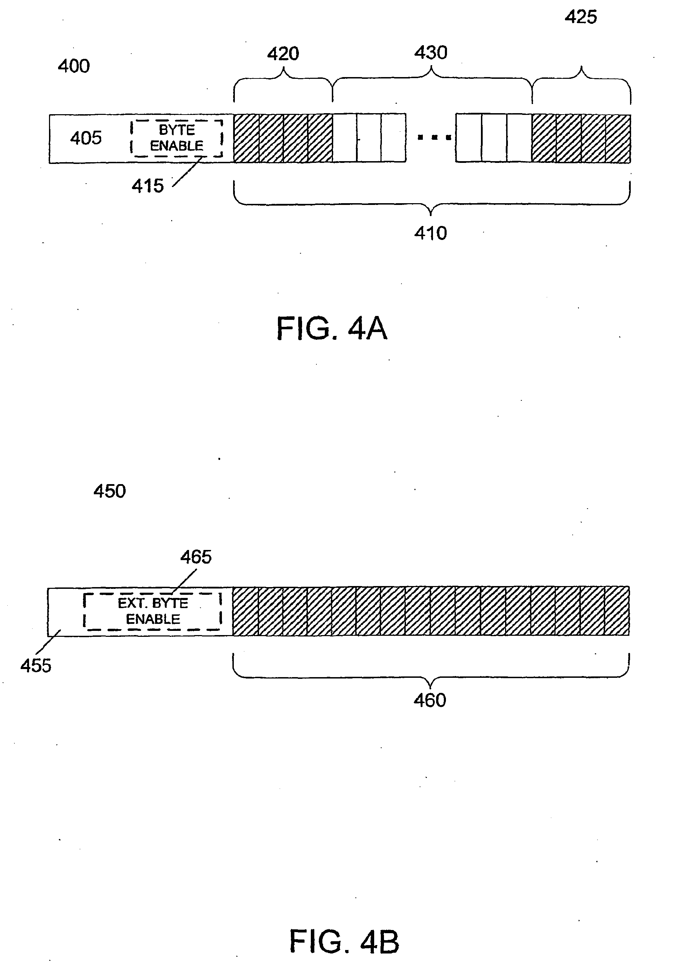

Despite the inclusion of byte enable data for selectively masking portions of a block of data from being written to memory, selective memory access still requires substantial overhead. As an example, figure 4A illustrates a standard packet 400 of data formatted according to the PCI-Express standard. Packet 400 includes a header 405 and a body 410. The body 410 contains the data to be communicated from one device, such as a graphics processing subsystem, to another device, such as a memory controller associated with a computer's system memory, over a data bus. The header 405 includes information to direct the packet 400 to its intended destination.

The header 405 of the standard packet 400 also includes byte enable data 415. According to the PCI-Express standard, the byte enable data 415 is an 8-bit mask value. The byte enable data 415 allows the first four bytes of data 420 and the last four bytes of data 425 in the body 410 to be selectively masked according to the value of the byte enable data 415. For example, if the first bit in the byte-enable data 415 is a "0," then the first byte in the body 410 will not be written to the destination device. Conversely, setting a bit in the byte enable data 415 to "1" will allow the corresponding byte in the body 410 to be written to the destination device. However, the byte-enable data 415 only enables selective masking of the first four bytes 420 and the last four bytes 425 of the body. According to the PCI-Express standard, the middle bytes of data 430 in body 410 must be written to the destination device in their entirety.

Because the PCI-Express standard limits the byte enable data to an 8-bit value, the graphics processing subsystem is severely limited when trying to write arbitrarily masked image data. The graphics processing subsystem often requires the ability to selectively mask any byte in the packet body. However, when using the standard PCI-Express packet, the graphics processing subsystem can only mask up to eight bytes at a time. Thus, in using the standard PCI-Express packet, the graphics processing subsystem is limited to packets with 8-byte bodies when arbitrary byte masking is required. Should the graphics processing subsystem require arbitrary byte masking for larger groups of data, the graphics processing subsystem must break the block of data down into 8-byte or less portions and use a separate PCI-Express packet for each portion.

Using PCI-Express packets with 8-byte bodies is extremely wasteful of data bus bandwidth. As a typical PCI-Express header is 20-bytes long, sending 8-bytes of data in a packet body requires 28 bytes total. This wasteful overhead is exacerbated when the graphics processing subsystem needs arbitrary byte masking for larger groups of data. For example, sending a 32-byte group of data with arbitrary byte masking requires four separate standard PCI-Express packets, consuming a total of 112 bytes of bus bandwidth.

Figure 4B illustrates an improved PCI-Express packet 450 allowing for arbitrary byte masking for communications over a data bus according to an embodiment of the invention. The PCI-Express standard allows for the definition of vendor defined packets. Vendor defined packets can have a non-standard packet header, provided that the destination device is capable of interpreting the non-standard packet header. Figure 4B illustrates a vendor-defined packet 450 including a non-standard header 455 and a body 460. As in the standard PCI-Express packet, the body 460 contains the data to be communicated from one device to another device over a data bus. The header 455 includes information to direct the packet 450 to its intended destination.

The non-standard header 455 also includes extended byte enable data 465. In an embodiment, the extended byte enable data 465 includes sufficient bits to allow for arbitrary masking of any byte in the body 460. In a further embodiment, the number of bits in the extended byte enable data 465 is equal to the number of bytes in the body 465. In an example implementation, the extended byte enable data 465 is 32 bits, allowing for up to 32 bytes of data in the body 460 to be selectively masked.

Because the destination device must be able to properly interpret the non-standard header 455 of the packet 450, an embodiment of the invention uses a device driver associated with the graphics processing subsystem to detect whether the computer's system memory controller, which may be integrated with the computer system Northbridge or with the CPU, is compatible with the non-standard header 455 of packet 460. If the system memory controller is compatible, the graphics processing subsystem is instructed to use the format of packet 450 for selectively masking data written to system memory. Conversely, if the system memory controller is not compatible, the device driver instructs the graphics processing subsystem to use the format of the standard PCI-Express packet 400 for selectively masking data written to system memory.

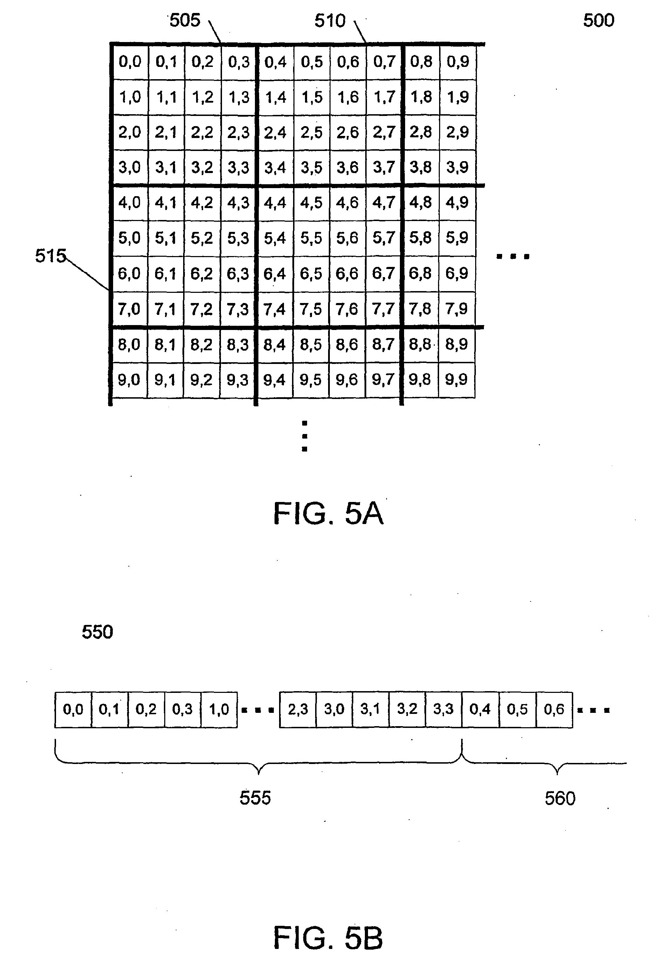

Figures 5A and 5B illustrate a system of organizing display information in system memory to improve rendering performance according to an embodiment of the invention. Typically, a two-dimensional array of image data has been arranged in system or graphics memory as a series of rows or columns connected end to end. For example, a frame buffer in memory will start with all of the image data for the first row of pixels in an image, followed by all of the image data for the second row of pixels in the image, then all of the image data for the third row of pixels in an image, and so forth.

Although this arrangement of image data simplifies the conversion of two-dimensional coordinates in an image to a corresponding location for memory, it requires additional data bus bandwidth for unified memory architectures. Graphics processing subsystems access graphics memory with a high degree of two-dimensional locality. For example, a graphics processing system may simultaneously create image data for a given pixel and the nearby pixels, both in the same row and in nearby rows.

Continuing with this example, when using the linear memory arrangement described above, the distance in system memory between adjacent pixels in different rows will be hundreds or thousands of bytes apart. Because this distance is greater than the size allowed for data bus packets, especially in prior implementations where the size of byte enable data in packet headers limits the length of packet bodies, as discussed above, the graphics processing subsystem must send multiple small packets over the data bus to the system memory to write image data for a group of adjacent pixels. The data bus overhead incurred by using multiple small packets, rather than one large packet, decreases the performance and efficiency of the computer system.

Figures 5A and 5B illustrate a system of organizing display information in system memory to improve rendering performance according to an embodiment of the invention. To leverage the two-dimensional locality of image data generated by the graphics processing subsystem, an embodiment of the invention organizes image data as a set of tiles. Each tile includes image data for a two-dimensional array of pixels. Figure 5A illustrates a portion of an image 500. Image 500 is divided into a number of tiles, including tiles 505, 510, and 515. In the embodiment of Figure 5A, each tile includes a 4 by 4 array of pixels. However, square and non-square tiles having any number of pixels may be used in alternate embodiments. In Figures 5A, each pixel is labeled with the pixel's row and column in the image 500. For example, tile 505 includes the first four pixels in each of the first four rows of the image 500.

Figure 5B illustrates image data 550 representing a portion of the image 500 arranged in system memory according to an embodiment of the invention. In this embodiment, image data for each tile is stored contiguously in system memory. For example, the portion 555 of system memory stores image data for all of the pixels in tile 505. In an embodiment, following the image data for tile 505 is a portion 560 of system memory that stores image data for all of the pixels in tile 510. Alternatively, the portion 560 of system memory may store image data for all of the pixels in tile 515.

By storing image data as a set of two-dimensional tiles of pixels, the distance in system memory between pixels in adjacent rows is reduced, particularly in the cases where both pixels reside in the same tile. As a result, the graphics processing subsystem is frequently able to write a set of nearby pixels to system memory using a single write operation over the data bus.

In a further embodiment, the arrangement of image data as tiles in system memory is hidden from the portions of the graphics processing system and/or the CPU. Instead, pixels are referenced by a virtual address in a frame buffer arranged scanline by scanline as discussed above. A tile address translation portion of the graphics processing subsystem translates memory access requests using the virtual address into one or more access requests to the tiled arrangement of image data stored in system memory.

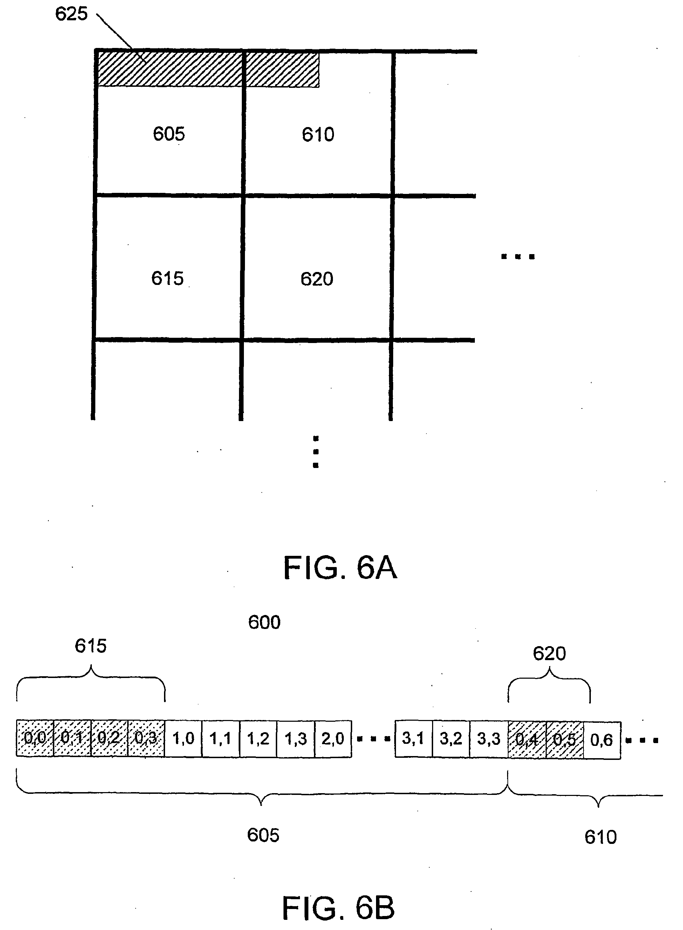

Figure 6A and 6B illustrate an example for accessing image data according to an embodiment of the invention. Figure 6A illustrates a portion of an example image 600. Example image 600 includes tiles 605, 610, 615, and 620. Region 625 corresponds to an example set of pixels to be accessed by the graphics processing subsystem. In this example, region 625 covers portions of tiles 605 and 610. In an embodiment, region 625 is referenced using one or more virtual addresses.

To retrieve image data corresponding to the region 625, the graphics processing subsystem translates the one or more virtual memory addresses used to reference the region 625 into one or more system memory addresses. In an embodiment, a tile translation table is used to translate between virtual memory addresses and system memory addresses. The graphics processing subsystem then retrieves all or portions of one or more tiles containing the desired image data.

Figure 6B illustrates a portion of system memory 600 including image data corresponding to the region 625 discussed above. The portion of system memory 600 includes image data 605 corresponding to tile 605 and image data 610 corresponding to tile 610. Within image data 605, a subset of image data 615 corresponds to the portion of region 625 within tile 605. Similarly, a subset of image data 620 within image data 610 corresponds to the portion of region 625 within tile 610.

In an embodiment, the graphics processing subsystem identifies one or more tiles including the requested region of the image. The graphics processing subsystem then retrieves each of the identified tiles and discards image data outside of the requested region. The remaining portions of image data are then assembled by the graphics processing subsystem into a contiguous set of image data corresponding with the requested region of the image. Alternatively, the graphics processing subsystem may retrieve only the required portions of each identified tile. In this embodiment, the graphics processing subsystem may retrieve image data corresponding with a contiguous region of an image using a number of non-contiguous memory accesses.

The graphics processing subsystem may access regions of the image stored in system memory in a tiled arrangement for a number of different purposes, including reading and writing image data to render an image. In one embodiment, the graphics processing subsystem transfers an image to be displayed into a local memory, such as local memory 330 discussed above, prior to scanout. An alternate embodiment of the invention allows the graphics processing subsystem to transfer a rendered image from system memory to a display device, a process referred to as scanout. Scanout requires typically requires that image data be communicated to the display device at precise time intervals. If the graphics processing subsystem is unable to communicate image data with display device at the proper time, for example, due to a delay in retrieving image data from system memory, visual artifacts such as tearing will be introduced.

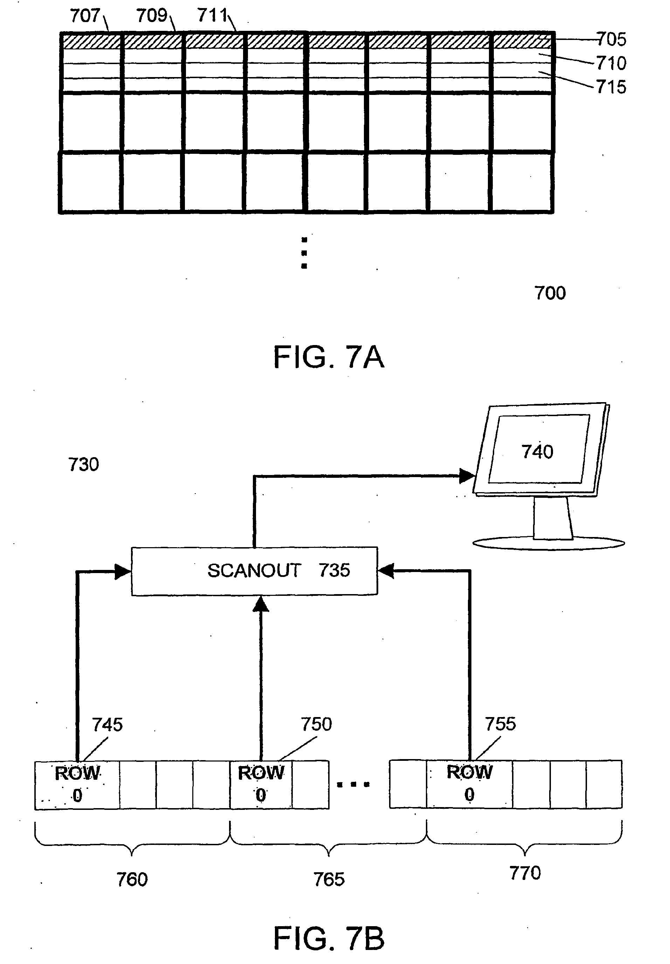

Typically, image data is communicated row by row to a display device In an embodiment, the graphics processing subsystem retrieves image data for one or more rows of the image ahead of the row being communicated to the display device. Figure 7A illustrates an example application of this embodiment. Figure 7A illustrates an image 700. In an embodiment, the image is divided into tiles as discussed above. The graphics processing subsystem communicates row 705 of image 700 to the display device. As row 705 is being communication with the display device, the graphics processing subsystem is retrieving image data from system memory for subsequent rows of image 700, for example row 710 and/or row 715.

Figure 7B illustrates the operation of an example portion 730 of the graphics processing subsystem used to communicate image data with a display device. Portion 730 includes a scanout unit 735 adapted to convert image data into a display signal to be communicated with a display device 740. The display signal output by the scanout unit 735 may be a digital or analog signal.

In an embodiment, the scanout unit retrieves image data in a tiled format from the system memory. Because each tile of image data includes two or more rows of image data for a portion of the image, the scanout unit 735 assembles the desired row of the image from portions of each retrieved tile. For example, the image data for row 705 may be assembled from portions of a number of different tiles, including portion 745 of image data 760 for tile 707, portion 750 of image data 765 for tile 709, and portion 755 of image data 770 for tile 711. In an embodiment, the unused portions of the retrieved tiles are discarded.

In an alternate embodiment, as the scanout unit 735 retrieves image data for a given row from a set of tiles, the scanout unit 735 also stores image data for one or more subsequent rows of the image. This reduces the number accesses to system memory for scanout, thereby improving the efficiency and performance of the graphics processing subsystem.

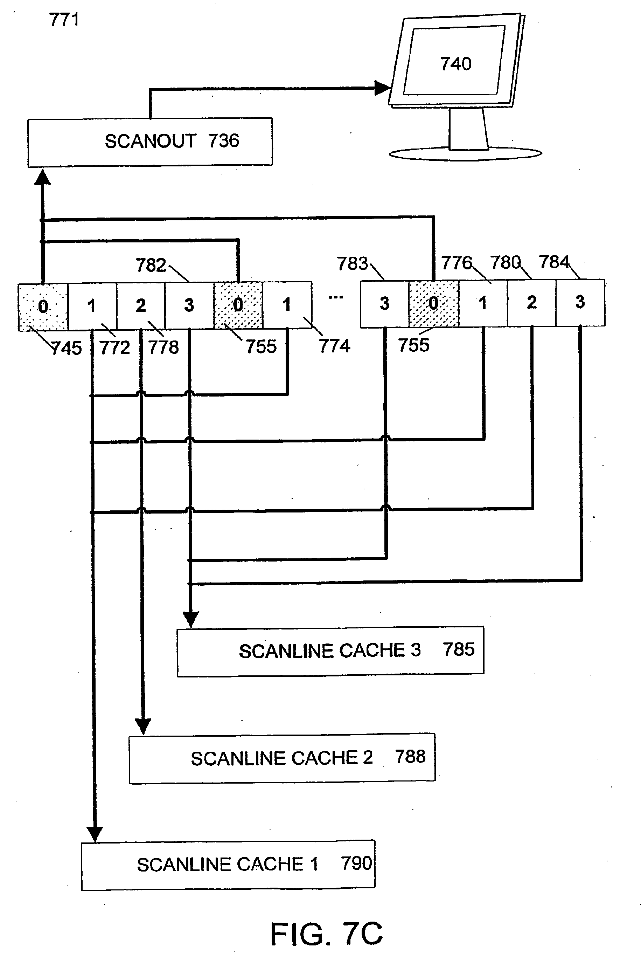

Figure 7C illustrates the operation of an example implementation 771 of this alternate embodiment. In this example, the scanout unit 736 retrieves tiles of image data from system memory that include the row desired by the scanout unit 736. The scanout unit assembles the desired row from appropriate portions of each retrieved tile. For example, image data for row 705 can be assembled from a number of portions of different tiles, including portions 745, 750, and 755.

As the image data for the desired row is assembled from portions of a number of tiles, image data for one or more subsequent rows is stored in one or more scanline caches. For example, the image data for the first row subsequent to the desired row, for example row 710, is stored in scanline cache 790. Image data for the first subsequent row may include tile portions 772, 774, and 776. Similarly, image data for the second subsequent row, including tile portions 778 and 780, is stored in scanline cache 788. Image data for the third subsequent row, including tile portions 782, 783, and 784, is stored in scanline cache 785.

Thus, for subsequent rows, scanline unit 736 can retrieve image data for the next desired row from the appropriate scanline cache. In an embodiment, there is a scanline cache corresponding to each row of image data in a tile of an image, so that the scanline unit 735 only needs to read each tile from system memory once for a given image. Alternate embodiments may have fewer scanline caches to reduce the hardware complexity of the graphics processing subsystem.

This invention provides a graphics processing subsystem capable of using system memory as its graphics memory for rendering and scanout of images. Although this invention has been discussed with reference to computer graphics subsystems, the invention is applicable to other components of a computer system, including audio components and communications components. The invention has been discussed with respect to specific examples and embodiments thereof; however, these are merely illustrative, and not restrictive, of the invention. Thus, the scope of the invention is to be determined solely by the claims.

## Claims

1. A graphics processing subsystem (220), comprising: a rendering unit adapted to create image data for a rendered image in response to rendering data; and a data bus interface adapted to be connected with a system memory device (230) of a computer system via a data bus; **characterized in that** in response to a write operation of a first data (210) received via a first virtual channel of the data bus to a graphics memory associated with the graphics processing subsystem, the graphics processing subsystem is adapted to retrieve via a second virtual channel of the data bus a second data (225) necessary to complete the write operation of the first data, to determine from the second data a destination for the first data in the system memory, and to redirect the write operation of the first data to the destination for the first data in the system memory.

2. The graphics processing subsystem of claim 1, wherein the destination for the first data in the system memory is within a portion of the system memory designated as the graphics memory associated with the graphics processing subsystem.

3. The graphics processing subsystem of claim 1, further adapted to retrieve the second data from a local memory connected with the graphics processing subsystem.

4. The graphics processing subsystem of claim 1, wherein the second data includes address translation information, and the graphics processing subsystem is adapted to translate a virtual address associated with the graphics memory to a corresponding destination in system memory.

5. The graphics processing subsystem of claim 1, wherein the second data includes context state information, and the graphics processing subsystem is adapted to perform a context switch in response to the first data.

6. The graphics processing subsystem of claim 1, further comprising: a tile address translation unit adapted to convert a virtual memory address corresponding to a location in an image to a memory address within a tiled arrangement of image data in system memory.

7. The graphics processing subsystem of claim 6, wherein the tile address translation unit is further adapted to initiate a plurality of system memory accesses via the data bus interface over the data bus in response to a range of virtual memory addresses corresponding to a contiguous portion of an image.

8. The graphics processing subsystem of claim 7, wherein the plurality of system memory accesses are for non-contiguous portions of system memory.

9. The graphics processing subsystem of claim 1, wherein the data bus interface is adapted to communicate a third data with the system memory via the data bus using a data packer of a first data packet type in response to an instruction indicating that a memory controller associated with the system memory is compatible with the first data packet type and to communicate the third data with the system memory via the data bus using a plurality of data packets of a second data packet type in response to an instruction indicating that the memory controller is incompatible with the first data packet type.

10. The graphics processing subsystem of claim 9, wherein the first data packet type includes extended byte enable data.

11. The graphics processing subsystem of claim 1, further including a display device controller adapted to communicate a display signal corresponding with the rendered image with a display device.

12. The graphics processing subsystem of claim 11, wherein the display device controller is adapted to retrieve image data corresponding with the rendered image from a local memory connected with the graphics processing subsystem.

13. The graphics processing subsystem of claim 11, wherein the display device controller is adapted to retrieve image data corresponding with the rendered image from the system memory.

14. The graphics processing subsystem of claim 13, wherein the display device controller is adapted to retrieve a first image data corresponding with a first row of the rendered image from a tiled arrangement of image data in the system memory and to communicate the first image data with the display device. '

15. The graphics processing subsystem of claim 14, wherein the display device controller is adapted to retrieve a set of image data from the system memory corresponding with a set of tiles of the rendered image including the first row of the rendered image.

16. The graphics processing subsystem of claim 15, wherein the display device controller is adapted to discard a portion of the set of image data not including the first row of image data.

17. The graphics processing subsystem of claim 15, wherein the display device controller includes an image data cache adapted to store a second image data included in the set of tiles and corresponding with at least one additional row of the rendered image; and wherein the display device controller is adapted to retrieve the second image data from the image data cache subsequent to retrieving the first image data and to communicate the second image data with the display device.

## Patentansprüche

1. Ein Graphikverarbeitungs-Untersystem (220) aufweisend:
eine Rendereinheit, die zum Erzeugen von Bilddaten für einen gerendertes Bild in Antwort auf Renderdaten geeignet ist;
und eine Datenbus-Schnittstelle, die geeignet ist, um mit einer Systemspeichervorrichtung (230) eines Computersystems über einen Datenbus verbunden zu werden;
**dadurch gekennzeichnet,**
**dass** in Antwort auf eine Schreiboperation von ersten Daten (210) empfangen über einen ersten virtuellen Kanal des Datenbuses auf einen Graphikspeicher, der mit dem Graphikverarbeitungs-Untersystem assoziiert ist, das Graphikverarbeitungs-Untersystem geeignet ist, um über einen zweiten virtuellen Kanal des Datenbuses zweite Daten (225), die notwendig sind, um die Schreiboperation der ersten Daten zu vollenden, abzurufen, um von den zweiten Daten ein Ziel für die ersten Daten in dem Systemspeicher zu bestimmen, und um die Schreiboperation der ersten Daten auf das Ziel für die ersten Daten in dem Systemspeicher umzuleiten.

2. Das Graphikverarbeitungs-Untersystem nach Anspruch 1, wobei das Ziel für die ersten Daten in dem Systemspeicher innerhalb eines Teilbereichs des Systemspeichers ist, der als der Graphikspeicher assoziiert mit dem Graphikverarbeitungs-Untersystem festgelegt ist.

3. Das Graphikverarbeitungs-Untersystem nach Anspruch 1, weiterhin geeignet, um die zweiten Daten von einem lokalen Speicher abzurufen, der mit dem Graphikverarbeitungs-Untersystem verbunden ist.

4. Das Graphikverarbeitungs-Untersystem nach Anspruch 1, wobei die zweiten Daten Adresskonvertierungsinformationen aufweisen, und das Graphikverarbeitungs-Untersystem geeignet ist, um eine virtuelle Adresse, die mit dem Graphikspeicher assoziiert ist, in ein entsprechendes Ziel in dem Systemspeicher zu konvertieren.

5. Das Graphikverarbeitungs-Untersystem nach Anspruch 1, wobei die zweiten Daten Kontextstatusinformationen aufweisen, und das Graphikverarbeitungs-Untersystem geeignet ist, um einen Kontextwechsel in Antwort auf die ersten Daten durchzuführen.

6. Das Graphikverarbeitungs-Untersystem nach Anspruch 1, weiterhin aufweisend:
eine Kacheladressumwandlungseinheit, die geeignet ist, um eine virtuelle Speicheradresse, die einer Position in einem Bild entspricht, in eine Speicheradresse innerhalb einer gekachelten Anordnung von Bilddaten in dem System umzuwandeln.

7. Das Graphikverarbeitungs-Untersystem nach Anspruch 6, wobei die Kacheladressumwandlungseinheit weiterhin geeignet ist, um eine Mehrzahl von Systemspeicherzugriffen über die Datenbus-Schnittstelle über den Datenbus in Antwort auf einen Bereich von virtuellen Speicheradressen, die einem zusammenhängenden Teilbereich eines Bilds entsprechen, zu initiieren.

8. Das Graphikverarbeitungs-Untersystem nach Anspruch 7, wobei die Mehrzahl von Systemspeicherzugriffen für nichtzusammenhängende Teilbereiche des Systemspeichers ist.

9. das Graphikverarbeitungs-Untersystem nach Anspruch 1, wobei die Datenbus-Schnittstelle geeignet ist, um dritte Daten mit dem Systemspeicher über den Datenbus unter Verwendung eines Datenpakets eines ersten Datenpakettyps in Antwort auf eine Anweisung, die anzeigt, dass eine Speichersteuereinheit, die mit dem Systemspeicher assoziiert ist, mit dem ersten Datenpakettyp kompatibel ist, zu kommunizieren und die dritten Daten mit dem Systemspeicher über den Datenbus unter Verwendung einer Mehrzahl von Datenpaketen eines zweiten Datenpakettyps in Antwort auf eine Anweisung, die anzeigt, dass die Speichersteuereinheit mit dem ersten Datenpakettyp inkompatibel ist, zu kommunizieren.

10. Das Graphikverarbeitungs-Untersystem nach Anspruch 9, wobei der erste Datenpakettyp erweiterte Bytefreigabedaten aufweist.

11. Das Graphikverarbeitungs-Untersystem nach Anspruch 1, weiterhin aufweisend eine Anzeigevorrichtungs-Steuereinheit, die geeignet ist, um ein Anzeigesignal, das dem gerenderten Bild entspricht, mit einer Anzeigevorrichtung zu kommunizieren.

12. Das Graphikverarbeitungs-Untersystem nach Anspruch 11, wobei die Anzeigevorrichtungs-Steuereinheit geeignet ist, um Bilddaten, die dem gerenderten Bild entsprechen, von einem lokalen Speicher, der mit dem Graphikverarbeitungs-Untersystem verbunden ist, abzurufen.

13. Das Graphikverarbeitungs-Untersystem nach Anspruch 11, wobei die Anzeigevorrichtungs-Steuereinheit geeignet ist, um Bilddaten, die dem gerenderten Bild entsprechen, von dem Systemspeicher abzurufen.

14. Das Graphikverarbeitungs-Untersystem nach Anspruch 13, wobei die Anzeigevorrichtungs-Steuereinheit geeignet ist, um erste Bilddaten, die einer ersten Reihe des gerenderten Bilds entsprechen, von einer gekachelten Anordnung von Bilddaten in dem Systemspeicher abzurufen und um die ersten Bilddaten mit der Anzeigevorrichtung zu kommunizieren.

15. Das Graphikverarbeitungs-Untersystem nach Anspruch 14, wobei die Anzeigevorrichtungs-Steuereinheit geeignet ist, um einen Satz von Bilddaten von dem Systemspeicher, die einem Satz von Kacheln des gerenderten Bilds einschließlich der ersten Reihe des gerenderten Bilds entsprechen, abzurufen.

16. Das Graphikverarbeitungsuntersystem nach Anspruch 15, wobei die Anzeigevorrichtungs-Steuereinheit geeignet ist, um einen Teilbereich des Satzes der Bilddaten zu verwerfen, nicht einschließend die erste Reihe von Bilddaten.

17. Das Graphikverarbeitungs-Untersystem nach Anspruch 15, wobei die Anzeigevorrichtungs-Steuereinheit einen Bilddatencache aufweist, der geeignet ist, um zweite Bilddaten, die in dem Satz von Kacheln aufgewiesen sind und zumindest einer zusätzlichen Reihe des gerenderten Bildes entsprechen, zu speichern; und
wobei die Anzeigevorrichtungs-Steuereinheit geeignet ist, um die zweiten Bilddaten von dem Bilddatencache im Anschluss an das Abrufen der ersten Bilddaten abzurufen und um die zweiten Bilddaten mit der Anzeigevorrichtung zu kommunizieren.

## Revendications

1. Un sous-système (220) de traitement graphique, comprenant : une unité de rendu adaptée pour créer des données d'images pour une image rendue en réponse à des données de rendu ; et une interface de bus de données adaptée pour être connectée à un dispositif de mémoire système (230) d'un système informatique via un bus de données, **caractérisé en ce qu'**en réponse à une opération d'écriture de premières données (210) reçues via un premier canal virtuel du bus de données par une mémoire graphique associée au sous-système de traitement graphique, le sous-système de traitement graphique est adapté pour extraire via un deuxième canal virtuel du bus de données des deuxièmes données (225) nécessaires pour terminer l'opération d'écriture des premières données, pour déterminer à partir des deuxièmes données une destination pour les premières données dans la mémoire système, et pour rediriger l'opération d'écriture des premières données vers la destination pour les premières données dans la mémoire système.

2. Le sous-système de traitement graphique selon la revendication 1, dans lequel la destination pour les premières données dans la mémoire système est dans une partie de la mémoire système désignée en tant que mémoire graphique associée au sous-système de traitement graphique.

3. Le sous-système de traitement graphique selon la revendication 1, adapté en outre pour extraire les deuxièmes données d'une mémoire locale connectée au sous-système de traitement graphique.

4. Le sous-système de traitement graphique selon la revendication 1, dans lequel les deuxièmes données comportent une information de traduction d'adresse, et le sous-système de traitement graphique est adapté pour traduire une adresse virtuelle associée à la mémoire graphique en une destination correspondante dans la mémoire système.

5. Le sous-système de traitement graphique selon la revendication 1, dans lequel les deuxièmes données comportent une information d'état de contexte, et le sous-système de traitement graphique est adapté pour réaliser une commutation de contexte en réponse aux premières données.

6. Le sous-système de traitement graphique selon la revendication 1, comprenant en outre : une unité de traduction d'adresse de mosaïque adaptée pour convertir une adresse de mémoire virtuelle correspondant à un emplacement dans une image en une adresse de mémoire dans un arrangement en mosaïque de données d'image en mémoire système.

7. Le sous-système de traitement graphique selon la revendication 6, dans lequel l'unité de traduction d'adresse de mosaïque est adaptée en outre pour initialiser une pluralité d'accès en mémoire système via l'interface de bus de données sur le bus de données en réponse à une plage d'adresses de mémoire virtuelle correspondant à une partie contigüe d'une image.

8. Le sous-système de traitement graphique selon la revendication 7, dans lequel la pluralité d'accès en mémoire système sont pour des parties non contigües de mémoire système.

9. Le sous-système de traitement graphique selon la revendication 1, dans lequel l'interface de bus de données est adaptée pour communiquer des troisièmes données à la mémoire système via le bus de données en utilisant un paquet de données du type de paquet de premières données en réponse à une instruction indiquant qu'un contrôleur de mémoire associé avec la mémoire système est compatible avec le type d'un paquet de premières données et pour communiquer les troisièmes données à la mémoire système via le bus de données en utilisant une pluralité de paquets de données du type d'un paquet de deuxièmes données en réponse à une instruction indiquant que le contrôleur de mémoire est incompatible avec le type de paquet de premières données.

10. Le sous-système de traitement graphique selon la revendication 9, dans lequel le type de paquet de premières données comprend des données d'activation à octet étendu.

11. Le sous-système de traitement graphique selon la revendication 1, comprenant en outre un contrôleur de dispositif d'affichage adapté pour communiquer un signal d'affichage correspondant avec l'image rendue à un dispositif d'affichage.

12. Le sous-système de traitement graphique selon la revendication 11, dans lequel le contrôleur de dispositif d'affichage est adapté pour extraire des données d'images correspondant avec l'image rendue à partir d'une mémoire locale connectée avec le sous-système de traitement graphique.

13. Le sous-système de traitement graphique selon la revendication 11, dans lequel le contrôleur de dispositif d'affichage est adapté pour extraire des données d'images correspondant avec l'image rendue à partir de la mémoire système.

14. Le sous-système de traitement graphique selon la revendication 13, dans lequel le contrôleur de dispositif d'affichage est adapté pour extraire des premières données d'image correspondant avec une première rangée de l'image rendue à partir d'un arrangement en mosaïque de données d'image dans la mémoire système et pour communiquer les premières données d'image au dispositif d'affichage.

15. Le sous-système de traitement graphique selon la revendication 14, dans lequel le contrôleur de dispositif d'affichage est adapté pour extraire un ensemble de données d'image depuis la mémoire système correspondant à un ensemble de mosaïque de l'image rendue comportant une première rangée de l'image rendue.

16. Le sous-système de traitement graphique selon la revendication 15, dans lequel le contrôleur de dispositif d'affichage est adapté pour écarter une partie de l'ensemble de données d'image ne comportant pas la première rangée de données d'image.

17. Le sous-système de traitement graphique selon la revendication 15, dans lequel le contrôleur de dispositif d'affichage comporte un cache de données d'image adapté pour stocker des deuxièmes données d'image incluses dans l'ensemble de mosaïques et correspondant à au moins un rang additionnel de l'image rendue ; et dans lequel le contrôleur de dispositif d'affichage est adapté pour extraire les deuxièmes données d'image à partir du cache de données suite à l'extraction des premières données d'image et pour communiquer les deuxièmes données d'images au dispositif d'affichage.
